(19) Europäisches Patentamt
European Patent Office
Office européen des brevets

(11) **EP 3 205 401 A1**

(12) **EUROPEAN PATENT APPLICATION**
published in accordance with Art. 153(4) EPC

(43) Date of publication:
16.08.2017 Bulletin 2017/33

(51) Int Cl.:
*B01J 35/04* [(2006.01)]    *B01D 53/94* [(2006.01)]
*B01J 29/76* [(2006.01)]    *F01N 3/10* [(2006.01)]
*F01N 3/28* [(2006.01)]

(21) Application number: 15849408.8

(22) Date of filing: 07.10.2015

(86) International application number:
PCT/JP2015/078444

(87) International publication number:
WO 2016/056576 (14.04.2016 Gazette 2016/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 09.10.2014 JP 2014207848

(71) Applicant: Ibiden Co., Ltd.
Ogaki-shi, Gifu 503-8604 (JP)

(72) Inventor: MIYASHITA, Toshiyuki
Ibi-gun
Gifu 501-0695 (JP)

(74) Representative: Marschall, Stefan
Elbpatent
Marschall & Partner
Patent- und Rechtsanwaltskanzlei mbB
Bavariaring 26
80336 München (DE)

(54) **HONEYCOMB CATALYST**

(57)    This honeycomb catalyst is provided with a honeycomb unit in which a plurality of through holes are arranged in parallel in a longitudinal direction with being separated by partition walls, wherein the honeycomb unit contains a zeolite and an inorganic binder, the zeolite satisfies all of conditions (A) to (D): (A) having a CHA structure in which the composition ratio of $SiO_2/Al_2O_3$ is less than 15; (B) having Cu being carried by 3.5 to 6.0 wt% with respect to zeolite; (C) having an average particle diameter of 0.05 to 1 $\mu$m; and (D) being contained by 150 to 350 g/L with respect to the whole of the honeycomb unit, and excellent NOx purifying performance, reduction of water absorption and displacement, and inhibition of crack occurrence can be exerted.

FIG. 1

**Description**

TECHNICAL FIELD

The present invention relates to a honeycomb catalyst for purifying exhaust gas discharged from an internal combustion engine, and particularly, relates to a honeycomb catalyst for use in SCR (Selective Catalyst Reduction) for reducing NOx in the exhaust gas.

BACKGROUND ART

Heretofore, as one of systems which purify exhaust gas of an automobile, there has been known an SCR system that reduces NOx to nitrogen and water by using ammonia. In this SCR system, a honeycomb unit, in which a large number of through holes allowing the exhaust gas to pass therethrough are provided in parallel in a longitudinal direction, is used as an SCR catalyst carrier, and for example, one is known, which is formed by performing extrusion molding for materials which contain zeolite as a main raw material. In this case, as the zeolite, there are used SAPO (silicoaluminophosphate), β zeolite, ZSM-5 zeolite, and the like.
In the honeycomb catalyst using zeolite, it is known that strength thereof cannot be maintained sufficiently when an amount of zeolite is increased, and for reinforcement of the honeycomb catalyst, it is proposed to mix and use $Al_2O_3$ and the like as inorganic particles (for example, refer to Patent Documents 1 and 2). In Patent Document 1, a honeycomb structure is disclosed, which attempts to enhance strength thereof by containing $Al_2O_3$ therein in a predetermined ratio. Moreover, in Patent Document 2, as one that aims to enhance heat resistance and durability in a case of being used as the SCR catalyst carrier, zeolite with a CHA structure is disclosed, in which a composition ratio of $SiO_2/Al_2O_3$ is less than 15, and a particle size is 1.0 to 8.0 μm. Then, the zeolite described in Patent Document 2 attempts to enhance purifying performance for NOx by carrying copper thereon.

PRIOR ART DOCUMENTS

PATENT DOCUMENTS

Patent Document 1: WO 2009/141888 A1
Patent Document 2: WO 2012/086753 A1

SUMMARY OF INVENTION

TECHNICAL PROBLEM

However, even if the zeolite with the CHA structure is taken as a raw material and is directly extruded to form such a honeycomb, the purifying performance for NOx has been sometimes unable to be exerted sufficiently. Moreover, a crack caused by an increase of water absorption displacement has sometimes occurred.
The present invention has been made in consideration of the above-described conventional problems, and it is an object of the present invention to provide a honeycomb catalyst, which is excellent in purifying performance for NOx, and is capable of reducing the water absorption displacement and suppressing the occurrence of the crack.

MEANS FOR SOLVING PROBLEM

The present invention that solves the above-described problems is as follows.

(1) A honeycomb catalyst including a honeycomb unit in which a plurality of through holes are provided in parallel in a longitudinal direction while being separated from one another by partition walls,
wherein the honeycomb unit contains zeolite and an inorganic binder, and
the zeolite satisfies all of conditions (A) to (D), which are:

(A) to have a CHA structure in which a composition ratio of $SiO_2/Al_2O_3$ is less than 15;
(B) to have Cu carried by 3.5 to 6.0 wt% with respect to zeolite;
(C) to have an average particle size of 0.05 to 1 μm; and
(D) to be contained by 150 to 350 g/L with respect to a whole of the honeycomb unit.

In the present invention, the composition ratio of $SiO_2/Al_2O_3$ of the zeolite having the CHA structure is small, that is, the ratio of $Al_2O_3$ is high, and accordingly, the honeycomb catalyst has many active sites, and can carry a large amount of Cu thereon. Moreover, if the composition ratio of $SiO_2/Al_2O_3$ exceeds 15, then a purification rate for NOx is lowered. A reason for this is that an amount of Cu that functions as a carriable catalyst becomes small if $SiO_2/Al_2O_3$ is high. Meanwhile, if a ratio of the zeolite is high, then in usual, displacement of the honeycomb unit, which may be caused by expansion/shrinkage of the zeolite due to water absorption/desorption, is prone to occur. However, in the present invention, even if the ratio of the zeolite is high, such water absorption displacement of the honeycomb unit can be reduced by adjusting the average particle size to 0.05 to 1 $\mu$m. That is to say, by regulating the zeolite as described above, the honeycomb catalyst of the present invention strikes a balance between excellent purifying performance for NOx and reduction of the water absorption displacement. Moreover, when the average particle size of the zeolite exceeds 1 $\mu$m, the water absorption displacement of the honeycomb catalyst made of the CHA zeolite becomes large, and it is apprehended that a crack may occur in the honeycomb catalyst.

(2) The honeycomb catalyst according to (1) described above, wherein the average particle size of the zeolite is 0.05 to 0. 5 $\mu$m. The average particle size of the zeolite is set within the above-described range, whereby the water absorption displacement of the honeycomb unit can be made smaller, and the crack can be prevented from occurring.

(3) The honeycomb catalyst according to either one of (1) and (2) described above, wherein the honeycomb unit further contains inorganic particles, and a content of the inorganic particles is 10 to 50 vol% per honeycomb unit. The inorganic particles with the above-described content is contained, whereby an absolute value of a linear expansion coefficient of the honeycomb unit can be made small while maintaining excellent NOx purifying performance, and a breakage of the honeycomb unit owing to a thermal stress can be prevented. That is, while the zeolite contained in the honeycomb unit of the present invention has a negative linear expansion coefficient, the inorganic particles having a positive linear expansion coefficient are added, whereby the absolute value of the linear expansion coefficient of the honeycomb unit can be made small.

(4) The honeycomb catalyst according to (3) wherein an average particle size of the inorganic particles is 0.01 to 5 $\mu$m. The average particle size of the inorganic particles is set within the above-described range, whereby strength of the honeycomb unit can be enhanced, and moreover, the pore size can be adjusted more effectively. If the average particle size is larger than 5 $\mu$m, then contact points between the zeolite and the inorganic particles are reduced, and the strength is sometimes lowered. Moreover, if the average particle size is smaller than 0.01 $\mu$m, then the pore size of the honeycomb unit becomes too small, and the NOx purifying performance is sometimes lowered.

(5) The honeycomb catalyst according to either one of (3) and (4) described above, wherein a ratio (Y/X) of the average particle size (X) of the zeolite and the average particle size (Y) of the inorganic particles is 1/10 to 5. If the ratio of the average particle size (X) of the zeolite and the average particle size (Y) of the inorganic particles stays within the above-described range, then excellent purifying performance for NOx is brought, and in addition, sufficient strength is obtained, and the occurrence of the crack can be prevented.

(6) The honeycomb catalyst according to any one of (1) to (5) described above, wherein the honeycomb unit further contains inorganic fiber. The inorganic fiber is contained in the honeycomb unit, whereby the strength can be further enhanced.

(7) The honeycomb catalyst according to any one of (1) to (6) described above, wherein a density of through holes on a cross section perpendicular to the longitudinal direction of the honeycomb unit is 62 to 186 pcs/cm$^2$, and a thickness of the partition walls of the honeycomb unit is 0.1 to 0.3 mm. The density of the through holes and the thickness of the partition walls in the honeycomb unit are set within the above-described range, whereby high NOx purifying performance can be obtained.

(8) The honeycomb catalyst according to any one of (1) to (7) described above, wherein the honeycomb catalyst has a columnar shape with a diameter of 140 to 350 mm, and a length of 75 to 310 mm. The honeycomb catalyst of the present invention is formed into a columnar shape with such sizes as described above, and is thereby suitable for a case of being mounted on an automobile.

ADVANTAGEOUS EFFECT

In accordance with the present invention, the honeycomb catalyst can be provided, which is excellent in purifying performance for NOx, and is capable of reducing the water absorption displacement and suppressing the occurrence of the crack.

BRIEF DESCRIPTION OF DRAWINGS

FIG. 1 is a perspective view schematically showing an example of a honeycomb catalyst of the present invention;
FIG. 2 is a perspective view schematically showing another example of the honeycomb catalyst of the present invention; and
FIG. 3 is a perspective view schematically showing an example of a honeycomb unit that composes the another honeycomb catalyst of the present invention.

DETAILED DESCRIPTION OF EMBODIMENTS

A honeycomb catalyst of the present invention is a honeycomb catalyst including a honeycomb unit in which a plurality of through holes are provided in parallel in a longitudinal direction while being separated from one another by partition walls, wherein the honeycomb unit contains zeolite and an inorganic binder, and the zeolite satisfies all of conditions (A) to (D), which are:

(A) to have a CHA structure in which a composition ratio of $SiO_2/Al_2O_3$ is less than 15;
(B) to have Cu carried by 3.5 to 6.0 wt% with respect to zeolite;
(C) to have an average particle size of 0.05 to 1 $\mu$m; and
(D) to be contained by 150 to 350 g/L with respect to a whole of the honeycomb unit.

Hereinafter, a description will be made in detail of respective components which compose the honeycomb catalyst of the present invention.

ZEOLITE

The zeolite according to the present invention satisfies all of the above-described conditions (A) to (D). That is to say, the zeolite according to the present invention is zeolite that has a CHA structure in which a composition ratio $SiO_2/Al_2O_3$ is less than 15 (hereinafter, the zeolite is also referred to as "CHA zeolite), wherein Cu is carried thereon by 3.5 to 6.0 wt%, the average particle size is 0.05 to 1 $\mu$m, and such a content is 150 to 350 g/L with respect to the whole of the honeycomb unit.

The zeolite according to the present invention is zeolite, which is named CHA as a structure code and classified thereby in the International Zeolite Association (IZA), and has a crystal structure equivalent to that of chapazite produced naturally.

Analysis of the crystal structure of the zeolite can be performed by using an X-ray diffraction (XRD) device. In the CHA zeolite, in an X-ray diffraction spectrum by a powder X-ray analysis method, peaks corresponding to a (211) plane, (104) plane and (220) plane of the CHA zeolite appear in vicinities of $2\theta$ = 20.7°, 25.1° and 26.1°, respectively. It is defined that crystallinity of the zeolite of the present invention is evaluated by a sum (X-ray integrated intensity ratio) of integrated intensities of the (211) plane, (104) plane and (220) plane of the zeolite with respect to a sum of integrated intensities of a peak corresponding to a (111) plane in a vicinity of $2\theta$ = 38.7° and a peak corresponding to a (200) plane in a vicinity of $2\theta$ = 44.9° in an X-ray diffraction spectrum of lithium fluoride.

It is preferable that the sum (X-ray integrated intensity ratio) of the integrated intensities of the (211) plane, (104) plane and (220) plane of the zeolite with respect to the sum of the integrated intensities of the (111) plane and (200) plane in the X-ray diffraction spectrum of the lithium fluoride be 3.1 or more.

Zeolite, in which the above-described X-ray integrated intensity ratio is 3.1 or more, has high crystallinity, has a structure less likely to undergo a change due to heat and the like, has high purifying performance for NOx, and is also excellent in heat resistance and durability. A method for obtaining this X-ray integrated intensity ratio is as described above.

CONDITION A

The composition ratio of $SiO_2/Al_2O_3$ of the above-described CHA zeolite means a molar ratio (SAR) of $SiO_2$ with respect to $Al_2O_3$ in the zeolite. Then, though the composition ratio of $SiO_2/Al_2O_3$ of the CHA zeolite according to the present invention is less than 15, the composition ratio is preferably 5 to 14.9, more preferably 10 to 14.9.

In the CHA zeolite according to the present invention, the composition ratio of $SiO_2/Al_2O_3$ therein is less than 15, and accordingly, acid sites of the CHA zeolite concerned can be ensured by a sufficient number, and the CHA zeolite can exchange ions thereof with metal ions by using the acid sites, and can carry a large amount of Cu, and therefore, is excellent in purifying performance of NOx. If the composition ratio of $SiO_2/Al_2O_3$ in the CHA zeolite exceeds 15, then a carried amount of Cu is small, and a purification rate for NOx is lowered.

Note that the molar ratio $SiO_2/Al_2O_3$ of the zeolite can be measured by using the fluorescent X-ray analysis (XRF).

CONDITION B

In the zeolite according to the present invention, Cu is carried by 3.5 to 6.0 wt% with respect to the zeolite. Cu is carried by 3.5 to 6.0 wt%, whereby high NOx purifying performance is obtained by means of a small amount of the zeolite. In a case where such a content of Cu is less than 3.5 wt%, then the NOx purifying performance is lowered, and in a case where the content of Cu exceeds 6.0 wt%, then ammonium oxidation is accelerated at a high temperature, and the purifying performance for NOx is lowered. It is preferable that Cu concerned be contained by 4.0 to 5.5 wt%.

A Cu ion exchange method can be performed by immersing the zeolite into a type of aqueous solution, which is selected from an aqueous solution of copper acetate, an aqueous solution of copper nitrate, an aqueous solution of copper sulfate and an aqueous solution of copper chloride. Among them, the aqueous solution of copper acetate is preferable. This is because, in accordance with the aqueous solution of copper acetate, a large amount of Cu can be carried at a time. For example, an aqueous solution of copper acetate (II), in which a concentration of copper is 0.1 to 2.5 wt%, is subjected to ion exchange under the atmospheric pressure at a solution temperature ranging from room temperature to 50°C, whereby copper can be carried on zeolite.

CONDITION C

The average particle size of the CHA zeolite according to the present invention is 0.05 to 1 $\mu$m, preferably 0.05 to 0.5 $\mu$m. In a case of manufacturing the honeycomb catalyst by using the zeolite having such a small average particle size, water absorption displacement thereof becomes small.

If the average particle size of the CHA zeolite according to the present invention is less than 0.05 $\mu$m, then a pore size of the honeycomb catalyst made thereof becomes too small, and the purifying performance for NOx becomes low. Meanwhile, if the average particle size exceeds 1 $\mu$m, then the water absorption displacement of the honeycomb made of the CHA zeolite becomes large, and it is apprehended that a crack may occur in the honeycomb catalyst.

The average particle size of the zeolite is obtained from an average value of diagonal lines, which is obtained by photographing an SEM picture by using a scanning electron microscope (SEM; S-4800 made by Hitachi High-Technologies Corporation) and measuring lengths of all diagonal lines of ten particles. Note that, as measuring conditions, an acceleration voltage is set to 1 kV, an emission is set to 10 $\mu$A, and a WD is set to 2.2 mm or less. In general, particles of the CHA zeolite are cubic, and become quadrate at a time of being imaged two-dimensionally by a SEM picture. Therefore, the number of diagonal lines in each of the particles is two.

CONDITION D

In the honeycomb catalyst of the present invention, the CHA zeolite is contained by 150 to 350 g/L with respect to the whole of the honeycomb unit. If the content of the CHA zeolite is less than 150 g/L, then the purifying performance for NOx is lowered, and if the content exceeds 350 g/L, then the water absorption displacement of the honeycomb unit becomes large, and the crack occurs. It is preferable that the content concerned be 150 to 250 g/L.

Next, a description will be made of a production method of the zeolite according to the present invention. The production method includes several methods, and an example thereof will be described below.

The production method of the zeolite according to the present invention includes a synthesis step of synthesizing the zeolite by causing a reaction of a raw material composition composed of a Si source, an Al source, an alkali source, water and a structure directing agent, wherein, in the synthesis step, a ratio of a number of moles of water with respect to a total number of moles of Si in the Si source and Al in the Al source (that is, number of moles of H2O / total number of moles of Si and Al) is 15 or more.

In the production method of the zeolite according to the present invention, first, there is prepared the raw material composition composed of the Si source, the Al source, the alkali source, water, and the structure directing agent.

The Si source refers to a compound, salt or a composition, which serves as a raw material of such a silicon component of the zeolite. As the Si source, for example, there can be used colloidal silica, amorphous silica, sodium silicate, tetraethyl orthosilicate, aluminosilicate gel, or the like, and two or more thereof may be used in combination. Among them, colloidal silica is preferable since the zeolite with a particle size of 0.1 to 0.5 $\mu$m can be obtained.

As the Al source, for example, there are mentioned aluminum sulfate, sodium aluminate, aluminum hydroxide, aluminum chloride, aluminosilicate gel, dried aluminum hydroxide gel and the like. Among them, aluminum hydroxide and dried aluminum hydroxide gel are preferable.

In order to produce the CHA zeolite taken as a target, it is preferable to use a Si source and an Al source, which have substantially the same molar ratio as a molar ratio ($SiO_2/Al_2O_3$) of the zeolite to be produced, and the molar ratio ($SiO_2/Al_2O_3$) in the raw material composition is preferably set to 5 to 30, more preferably set to 10 to 15.

As the alkali source, for example, there can be used sodium hydroxide, potassium hydroxide, rubidium hydroxide, cesium hydroxide, lithium hydroxide, alkaline components in aluminate and silicate, an alkaline component in aluminosilicate gel, and the like, and two or more thereof may be used in combination. Among them, potassium hydroxide, sodium hydroxide and lithium hydroxide are preferable.

With regard to an amount of water, the ratio of the number of moles of water with respect to the total number of moles of Si in the Si source and Al in the Al source (that is, number of moles of H2O / total number of moles of Si and Al) is 15 or more; however, it is more preferable that the ratio of the number of moles of water with respect to the total number of moles of Si in the Si source and Al in the Al source (that is, number of moles of H2O / total number of moles of Si and Al) be 17 to 25.

The structure directing agent (hereinafter, also referred to as SDA) refers to organic molecules which direct a pore size and crystal structure of the zeolite. By a type and the like of the structure directing agent, the structure and the like of the zeolite to be obtained can be controlled.

As the structure directing agent, there can be used at least one selected from the group consisting of: a hydroxide, a halide, a carbonate, a methyl carbonate, a sulfate and a nitrate, each of which uses N,N,N-trialkyladamantane ammonium as a cation; and a hydroxide, a halide, a carbonate, a methyl carbonate, a sulfate and a nitrate, each of which uses, as a cation, an N,N,N-trimethyl-benzyl ammonium ion, N-alkyl-3-quinuclidinol ion, or N,N,N-trialkyl exoaminonorbornane. Among them, it is preferable to use at least one selected from the group consisting of N,N,N-trimethyl adamantine ammonium hydroxide (hereinafter, also referred to as TMAAOH), N,N,N-trimethyl adamantane ammonium halide, N,N,N-trimethyl adamantane ammonium carbonate, N,N,N-trimethyl adamantane ammonium methyl carbonate, and N,N,N-trimethyl adamantane ammonium sulfate, and it is more preferable to use TMAAOH.

In the production method of the zeolite according to the present invention, it is preferable to further add a seed crystal of the zeolite to the raw material composition. By using the seed crystal, a crystallization rate of the zeolite is increased, whereby a time for the production of the zeolite can be shortened, and yield is enhanced.

As the seed crystal of the zeolite, it is preferable to use such zeolite having the CHA structure.

It is preferable that an additional amount of the seed crystal of the zeolite be small; however, in consideration of a reaction speed, an effect of suppressing impurities, and the like, the additional amount is preferably 0.1 to 20 wt%, more preferably 0.5 to 15 wt% with respect to an additional amount of such a silica component contained in the raw material composition.

In the production method of the zeolite according to the present invention, the zeolite is synthesized by causing the reaction of the prepared raw material composition, and it is preferable to synthesize the zeolite by performing hydrothermal synthesis for the raw material composition. Such a method of the hydrothermal synthesis can be performed in a similar way to the first production method of the zeolite.

In the production method of the zeolite according to the present invention, the zeolite is synthesized by causing the reaction of the prepared raw material composition. Specifically, it is preferable to synthesize the zeolite by performing the hydrothermal synthesis for the raw material composition.

A reaction vessel for use in the hydrothermal synthesis is not particularly limited as long as the reaction vessel concerned is usable for the known hydrothermal synthesis, and may be a heat-resistant and pressure-resistant vessel such as an autoclave. The raw material composition is charged into the reaction vessel, and the reaction vessel is hermetically sealed and heated, whereby the zeolite can be crystallized.

In the case of synthesizing the zeolite, it is preferable that a raw material mixture be in a state of being stirred and mixed though a stationary state thereof is allowed.

A heating temperature in the case of synthesizing the zeolite is preferably 100 to 200°C, more preferably 120 to 180°C. If the heating temperature is less than 100°C, then the crystallization rate becomes slow, and the yield becomes prone to be lowered. Meanwhile, if the heating temperature exceeds 200°C, then impurities become prone to be generated.

It is preferable that a heating time in the case of synthesizing the zeolite be 10 to 200 hours. If the heating time is less than 10 hours, then unreacted raw materials remain, and the yield becomes prone to be lowered. Meanwhile, even if the heating time exceeds 200 hours, the yield and the crystallinity are not enhanced any more.

A pressure in the case of synthesizing the zeolite is not particularly limited, and may satisfactorily be a pressure generated when the raw material composition charged into the hermetically sealed vessel is heated to the above-described temperature range; however, the pressure may be increased according to needs by adding inert gas such as nitrogen.

In the production method of the zeolite according to the present invention, after the zeolite is synthesized, preferably, the zeolite is cooled sufficiently, is subjected to solid-liquid separation, is washed by means of a sufficient amount of water, and is dried. A drying temperature is not particularly limited, and may be an arbitrary temperature within a range of 100 to 150°C.

The synthesized zeolite contains the SDA in pores, and accordingly, the SDA may be removed according to needs. The SDA can be removed, for example, by liquid phase treatment using an acidic solution or a liquid chemical containing an SDA-decomposing component, exchange treatment using resin, thermal decomposition or the like.

By the process described above, the zeolite having the CHA structure, in which the composition ratio of $SiO_2/Al_2O_3$ is less than 15, and the average particle size is 0.1 to 0.5 $\mu$m, can be produced.

INORGANIC BINDER

In the honeycomb catalyst of the present invention, the inorganic binder contained in the honeycomb unit is not particularly limited. However, from a viewpoint of maintaining strength as the honeycomb catalyst, preferable examples of the inorganic binder include solid contents contained in alumina sol, silica sol, titania sol, water glass, sepiolite, attapulgite, and boehmite, and two or more thereof may be used in combination.

A content of the inorganic binder in the honeycomb unit is preferably 3 to 20 vol%, more preferably 5 to 15 vol%. If the content of the inorganic binder is 3 to 20 vol%, then excellent NOx purifying performance can be maintained without causing a decrease of the strength of the honeycomb unit.

INORGANIC PARTICLES

In the honeycomb catalyst of the present invention, it is preferable that the honeycomb unit further contain inorganic particles in order to enhance the strength of the honeycomb unit and to adjust the pore size.

The inorganic particles contained in the honeycomb unit are not particularly limited; however, examples thereof include particles of alumina, titania, zirconia, silica ceria, and magnesia. Two or more thereof may be used in combination. The inorganic particles are preferably particles of at least one selected from the group consisting of alumina, titania and zirconia, more preferably particles of any one of alumina, titania and zirconia.

The average particle size of the above-described inorganic particles is preferably 0.01 to 5 $\mu$m, more preferably 0.05 to 1 $\mu$m. If the average particle size of the inorganic particles is 0.01 to 5 $\mu$m, then it becomes possible to enhance the strength of the honeycomb unit, and to adjust the pore size to within a range suitable for the NOx purification.

Note that the average particle size of the inorganic particles is a particle size (Dv50) corresponding to a 50% integral value in the grain size distribution (in volume base) obtained by a laser diffraction/scattering method.

A content of the inorganic particles in the honeycomb unit is preferably 10 to 50 vol%, more preferably 15 to 40 vol% per honeycomb unit. If the content of the inorganic particles is 10 to 50 vol%, then an effect of reducing an absolute value of a linear expansion coefficient of the honeycomb unit, the effect being brought by addition of the inorganic particles, is obtained while maintaining the purifying performance for NOx, and breakage of the honeycomb unit owing to a thermal stress can be suppressed.

In the honeycomb catalyst of the present invention, a ratio (Y/X) of the average particle size (X) of the above-described zeolite and the average particle size (Y) of the inorganic particles is preferably 1/10 to 5, more preferably 1/5 to 2. If a value of the ratio concerned is 1/10 to 5, then gaps between portions of the zeolite are not filled with the inorganic particles, and the purifying performance for NOx can be prevented from being lowered. Moreover, the particles can be brought into appropriate contact with one another, sufficient strength is obtained, and the occurrence of the crack can be prevented.

Moreover, a volume ratio (zeolite: inorganic particles) of the zeolite and the inorganic particles is preferably 50: 50 to 90: 10, more preferably 60: 40 to 85: 15. If the volume ratio of the zeolite and the inorganic particles stays within the above-described range, then it becomes possible to reduce the absolute value of the linear expansion coefficient of the honeycomb unit while maintaining the purifying performance for NOx.

INORGANIC FIBER

In the honeycomb catalyst of the present invention, it is preferable that the honeycomb unit further contain inorganic fiber in order to enhance the strength thereof.

It is preferable that the inorganic fiber contained in the honeycomb unit be made at least one selected from the group consisting of alumina, silica, silicon carbide, silica alumina, glass, potassium titanate, and aluminum borate. This is because all of these materials have high heat resistance, are free from erosion even at a time of being used as catalyst carriers in the SCR system, and can maintain the effect as reinforcement materials.

A content of the inorganic fiber in the honeycomb unit is preferably 3 to 30 vol%, more preferably 5 to 20 vol%. If the above-described content is 3 to 30 vol%, then a content of the zeolite in the honeycomb unit is ensured sufficiently while enhancing the strength of the honeycomb unit, and the purifying performance for NOx can be prevented from being lowered.

In the honeycomb catalyst of the present invention, the honeycomb unit may contain zeolite other than the CHA zeolite and silicoaluminophosphate (SAPO) to an extent that these would not impair the effects of the present invention.

HONEYCOMB CATALYST

The honeycomb catalyst of the present invention is a honeycomb catalyst including a honeycomb unit that is composed of the above-described components and has a plurality of through holes provided in parallel in a longitudinal direction while being separated from one another by partition walls.

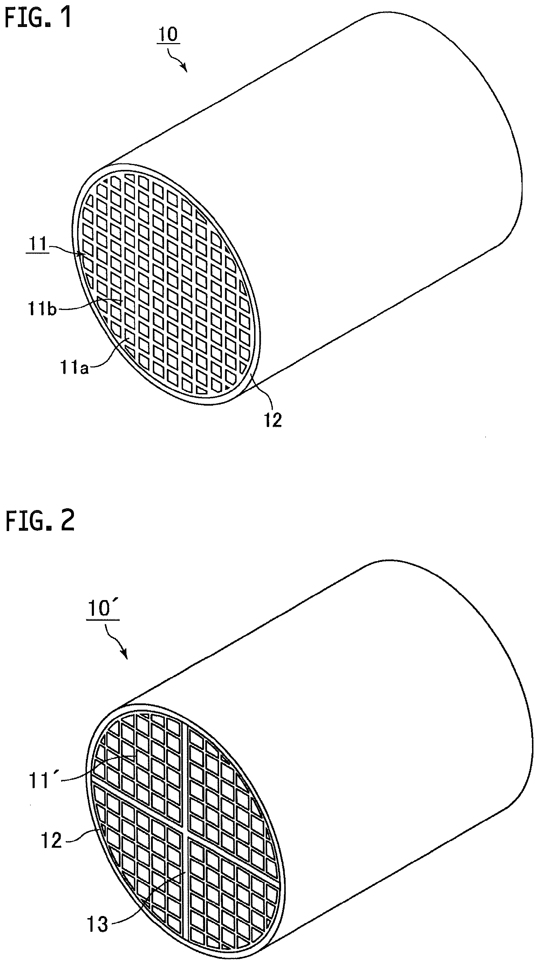

FIG. 1 shows an example of the honeycomb catalyst of the present invention. A honeycomb catalyst 10 shown in FIG. 1 includes a single honeycomb unit 11 in which a plurality of through holes 11a are provided in parallel in the longitudinal direction while being separated from one another by partition walls 11b, wherein an outer circumference coating layer 12 is formed on an outer circumferential surface of the honeycomb unit 11. Moreover, the honeycomb unit 11 contains the zeolite and the inorganic binder.

In the honeycomb catalyst of the present invention, a maximum peak pore size of the partition walls of the honeycomb unit (hereinafter, sometimes referred to as a maximum peak pore size of the honeycomb unit) is preferably 0.03 to 0.20 $\mu$m, more preferably 0.05 to 0.15 $\mu$m.

Note that the pore size of the honeycomb unit can be measured by using mercury porosimetry. The pore size is measured within a range of 0.01 to 100 $\mu$m while setting a contact angle of mercury at this time to 130° and setting surface tension thereof to 485 mN/m. A value of the pore size at a time when the pore size reaches a maximum peak within this range is referred to as the maximum peak pore size.

In the honeycomb catalyst of the present invention, it is preferable that a porosity of the honeycomb unit be 40 to 70%. If the porosity of the honeycomb unit is less than 40%, then exhaust gas becomes less likely to enter insides of the partition walls of the honeycomb unit, and the zeolite is not used effectively for purifying NOx. Meanwhile, if the porosity of the honeycomb unit exceeds 70%, then the strength of the honeycomb unit becomes insufficient.

Note that the porosity of the honeycomb unit can be measured by a gravimetric method. A measuring method of the porosity by the gravimetric method is as follows.

The honeycomb unit is cut into a size of 7 cells $\times$ 7 cells $\times$ 10 mm to prepare a measurement sample, and this sample is subjected to ultrasonic cleaning by using ion exchange water and acetone, followed by drying at 100°C in an oven. Subsequently, by using a measuring microscope (Measuring Microscope MM-40 made by Nikon Corporation; magnification: 100 power), dimensions of a cross-sectional shape of the sample are measured, and a volume thereof is obtained from a geometrical calculation. Note that, in a case where the volume cannot be obtained from the geometrical calculation, the volume is calculated by image processing for a picture of such a cross section.

Thereafter, a weight of the sample in a case where it is assumed that the sample is a perfect dense body is calculated based on the calculated volume and a real density of the sample, which is measured by a pycnometer.

Note that a measurement procedure by the pycnometer is set as follows. The honeycomb unit is crushed to prepare powder of 23.6 cc, and the obtained powder is dried at 200°C for 8 hours. Thereafter, by using Auto Pycnometer 1320 (made by Micrometrics Instrument Corporation), the real density is measured in conformity with JIS-R-1620 (1995). Note that an evacuation time at this time is set to 40 min.

Next, an actual weight of the sample is measured by an electronic balance (HR202i made by Shimadzu Corporation), and the porosity is calculated by a following expression.

$$100 - (\text{actual weight/weight as dense body}) \times 100 \ (\%)$$

In the honeycomb catalyst of the present invention, it is preferable that an aperture ratio of a cross section perpendicular to the longitudinal direction of the honeycomb unit be 50 to 75%. If the aperture ratio of the cross section perpendicular to the longitudinal direction of the honeycomb unit is less than 50%, then the zeolite is not used effectively for purifying NOx. Meanwhile, if the aperture ratio of the cross section perpendicular to the longitudinal direction of the honeycomb unit exceeds 75%, then the strength of the honeycomb unit becomes insufficient.

In the honeycomb catalyst of the present invention, it is preferable that a density of the through holes on the cross section perpendicular to the longitudinal direction of the honeycomb unit be 62 to 186 pcs/cm$^2$. If the density of the through holes concerned is 62 to 186 pcs/cm$^2$, then the zeolite and the exhaust gas contact each other with ease, and the purifying performance for NOx can be exerted sufficiently, and in addition, an increase of a pressure loss of the honeycomb catalyst can be suppressed.

In the honeycomb catalyst of the present invention, a thickness of the partition walls of the honeycomb unit is preferably 0.1 to 0.3 mm, more preferably 0.1 to 0.25 mm. If the thickness of the partition walls of the honeycomb unit is 0.1 to 0.3 mm, then a sufficient strength is obtained, and in addition, the exhaust gas enters the inside of each of the partition walls of the honeycomb unit with ease, and the zeolite is used effectively for purifying NOx.

In the honeycomb catalyst of the present invention, in a case where the outer circumference coating layer is formed in the honeycomb unit, it is preferable that a thickness of the outer circumference coating layer be 0.1 to 5.0 mm. If the thickness of the outer circumference coating layer is less than 0.1 mm, then the effect of enhancing the strength of the honeycomb catalyst becomes insufficient. Meanwhile, if the thickness of the outer circumference coating layer exceeds 5.0 mm, then the content of the zeolite per unit volume of the honeycomb catalyst is lowered, and the purifying performance for NOx is lowered.

A shape of the honeycomb catalyst of the present invention is not limited to such a columnar shape, and may be prism-like, elliptic cylinder-like, chamfered prism-like (for example, chamfered triangular prism-like), and so on.

Note that, in a case where the honeycomb catalyst of the present invention has such a columnar shape, a diameter thereof is preferably 140 to 350 mm, and a length thereof is preferably 75 to 310 mm.

In the honeycomb catalyst of the present invention, a shape of the through holes is not limited to a quadrangular prism shape, and may be triangular prism-like, hexagonal prism-like, and so on.

The above-described honeycomb catalyst of the present invention can be manufactured, for example, in the following manner. First, a raw material paste, which contains the zeolite and the inorganic binder, and according to needs, further contains the inorganic fiber and the inorganic particles, is used and subjected to extrusion molding, and a columnar honeycomb compact is fabricated, in which a plurality of through holes are provided in parallel in the longitudinal direction while being separated from one another by partition walls.

The inorganic binder contained in the raw material paste is as already mentioned, and an organic binder, a dispersion medium, a molding auxiliary and the like may be added to the raw material paste appropriately according to needs.

The organic binder is not particularly limited; however, examples thereof include methyl cellulose, carboxy methyl cellulose, hydroxyethyl cellulose, polyethylene glycol, phenolic resin, and epoxy resin, and two or more thereof may be used in combination. Note that an additional amount of the organic binder is preferably 1 to 10% with respect to a total weight of the zeolite, the inorganic particles, the inorganic binder and the inorganic fiber.

The dispersion medium is not particularly limited; however, examples thereof include water, an organic solvent such as benzene, and alcohol such as methanol, and two or more thereof may be used in combination.

The molding auxiliary is not particularly limited; however, examples thereof include ethylene glycol, dextrin, fatty acid, fatty acid soap, and polyalcohol, and two or more thereof may be used in combination.

Moreover, a pore-forming material may be added to the raw material paste according to needs. The pore-forming material is not particularly limited; however, examples thereof include polystyrene particles, acrylic particles, and starch, and two or more thereof may be used in combination. Among them, the polystyrene particles are preferable.

The particle sizes of the CHA zeolite and the pore-forming material are controlled, whereby a pore size distribution of the partition walls can be controlled within a predetermined range.

Moreover, even in a case where the pore-forming material is not added, the particle size of the inorganic particles is controlled, whereby the pore size distribution of the partition walls can be controlled within the predetermined range.

When the raw material paste is prepared, it is desirable that the raw material paste be mixed and kneaded, or the raw material paste may be mixed by using a mixer, an attritor or the like, or the raw material paste may be kneaded by using a kneader and the like.

Next, the honeycomb compact is dried by using a dryer such as a microwave dryer, a hot air dryer, a dielectric dryer, a decompression dryer, a vacuum dryer, and a freeze dryer, whereby a honeycomb dried body is prepared.

Moreover, the honeycomb dried body is degreased to prepare a honeycomb degreased body. A degreasing condition can be selected appropriately in accordance with a type and amount of such organic matter contained in the honeycomb dried body; however, is preferably 200°C to 500°C for 2 to 6 hours.

Next, the honeycomb degreased body is fired, whereby a columnar honeycomb unit is fabricated. A firing temperature is preferably 600 to 1000°C, more preferably 600 to 800°C. If the firing temperature is 600 to 1000°C, then reaction sites of the zeolite are not reduced, and the honeycomb unit having a sufficient strength is obtained.

Next, an outer circumference coating layer paste is applied to the outer circumferential surface of the columnar honeycomb unit except for both end surfaces thereof.

The outer circumference coating layer paste is not particularly limited; however, examples thereof include a mixture of an inorganic binder and inorganic particles, a mixture of an inorganic binder and inorganic particles, a mixture of the inorganic binder and inorganic fiber, and a mixture of the inorganic binder, the inorganic particles and the inorganic fiber.

The inorganic binder contained in the outer circumference coating layer paste is not particularly limited; however, is added as silica sol, alumina sol or the like, and two or more thereof may be used in combination. In particular, the inorganic binder is preferably added as silica sol.

The inorganic particles contained in the outer circumference coating layer paste is not particularly limited; however, examples thereof include: oxide particles made of zeolite, eucryptite, alumina, silica, or the like; carbide particles made of silicon carbide or the like; and nitride particles made of silicon nitride, boron nitride, or the like, and two or more thereof may be used in combination. Among them, the silica particles are preferable.

The inorganic fiber contained in the outer circumference coating layer paste is not particularly limited; however, examples thereof include silica alumina fiber, mullite fiber, alumina fiber, silica fiber, and glass fiber, and two or more thereof may be used in combination. Among them, the glass fiber is preferable.

The outer circumference coating layer paste may further contain an organic binder.

The organic binder contained in the outer circumference coating layer paste is not particularly limited; however, examples thereof include polyvinyl alcohol, methyl cellulose, ethyl cellulose, and carboxy methyl cellulose, and two or more thereof may be used in combination.

The outer circumference coating layer paste may further contain balloons which are fine hollow spheres of oxide-based ceramics, the pore-forming material, and the like.

The balloons contained in the outer circumference coating layer paste are not particularly limited; however examples thereof include alumina balloons, glass microballoons, sirasu balloons, fly ash balloons, and mullite balloons, and two or more thereof may be used in combination. Among them, the alumina balloons are preferable.

The pore-forming material contained in the outer circumference coating layer paste is not particularly limited; however, examples thereof include spherical acrylic particles, and graphite, and two or more thereof may be used in combination.

Next, the honeycomb unit 11, to which the outer circumference coating layer paste is applied, is dried and solidified, whereby the columnar honeycomb catalyst is fabricated. At this time, in a case where the organic binder is contained in the outer circumference coating layer paste, it is preferable to degrease the honeycomb unit 11. The degreasing condition can be selected appropriately in accordance with the type and amount of the organic matter; however, is preferably 200°C to 500°C for 1 hour.

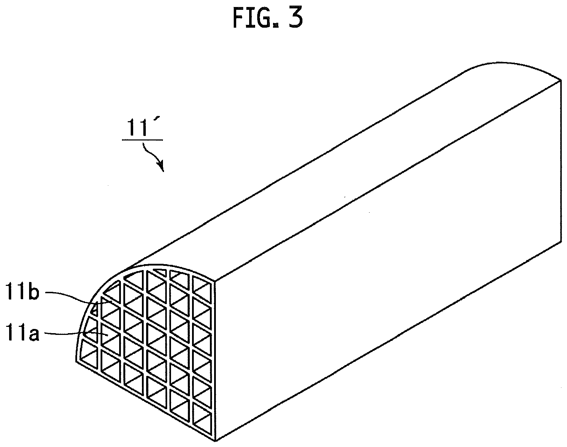

FIG. 2 shows another example of the honeycomb catalyst of the present invention. A honeycomb catalyst 10' shown in FIG. 2 has the same configuration as that of the honeycomb catalyst 10 except that a plurality of honeycomb units 11' (refer to FIG. 3), in which a plurality of through holes 11a are provided in parallel in the longitudinal direction while being separated from one another by partition walls 11b, are adhered to one another via an adhesive layer 13.

It is preferable that a cross-sectional area of a cross section perpendicular to the longitudinal direction in the honeycomb unit 11' be 10 to 200 cm$^2$. If the above-described cross-sectional area is less than 10 cm$^2$, then a pressure loss of the honeycomb catalyst 10' is increased. Meanwhile, if the above-described cross-sectional area exceeds 200 cm$^2$, then it is difficult to adhere the honeycomb units 11' to one another.

The honeycomb unit 11' has the same configuration as that of the honeycomb unit 11 except for the cross-sectional area of the cross section perpendicular to the longitudinal direction.

It is preferable that a thickness of the adhesive layer 13 be 0.1 to 3.0 mm. If the thickness of the adhesive layer 13 is less than 0.1 mm, then adhesion strength of the honeycomb unit 11' becomes insufficient. Meanwhile, if the thickness of the adhesive layer 13 exceeds 3.0 mm, then the pressure loss of the honeycomb catalyst 10' is increased, and a crack occurs in the adhesive layer.

Next, a description is made of an example of a manufacturing method of the honeycomb catalyst 10' shown in FIG. 2. First, the sectorial prism-like honeycomb units 11' are fabricated in a similar way to the honeycomb unit 11 that composes the honeycomb catalyst 10. Next, an adhesive layer paste is applied to outer peripheral surfaces of the honeycomb units 11' except for circular arc surfaces thereof, and the honeycomb units 11' are adhered to one another, and are then dried and solidified, whereby an aggregate of the honeycomb units 11' is fabricated.

The adhesive layer paste is not particularly limited; however, examples thereof include a mixture of an inorganic binder and inorganic particles, a mixture of an inorganic binder and inorganic particles, a mixture of the inorganic binder and inorganic fiber, and a mixture of the inorganic binder, the inorganic particles and the inorganic fiber.

The inorganic binder contained in the adhesive layer paste is not particularly limited; however, is added as silica sol, alumina sol or the like, and two or more thereof may be used in combination. In particular, the inorganic binder is preferably added as silica sol.

The inorganic particles contained in the adhesive layer paste is not particularly limited; however, examples thereof include: oxide particles made of zeolite, eucryptite, alumina, silica, or the like; carbide particles made of silicon carbide or the like; and nitride particles made of silicon nitride, boron nitride, or the like, and two or more thereof may be used in combination. Among them, the particles made of eucryptite, which has a linear expansion coefficient approximate to that of the honeycomb unit, are preferable.

The inorganic fiber contained in the adhesive layer paste is not particularly limited; however, examples thereof include silica alumina fiber, mullite fiber, alumina fiber, and silica fiber, and two or more thereof may be used in combination. Among them, the alumina fiber is preferable.

Moreover, the adhesive layer paste may contain an organic binder.

The organic binder contained in the adhesive layer paste is not particularly limited; however, examples thereof include polyvinyl alcohol, methyl cellulose, ethyl cellulose, and carboxy methyl cellulose, and two or more thereof may be used in combination.

The adhesive layer paste may further contain balloons which are fine hollow spheres of oxide-based ceramics, a pore-forming material, and the like.

The balloons contained in the adhesive layer paste are not particularly limited; however examples thereof include alumina balloons, glass microballoons, sirasu balloons, fly ash balloons, and mullite balloons, and two or more thereof may be used in combination. Among them, the alumina balloons are preferable.

The pore-forming material contained in the adhesive layer paste is not particularly limited; however, examples thereof include spherical acrylic particles, and graphite, and two or more thereof may be used in combination.

Next, the aggregate of the honeycomb unit 11' is cut and ground according to needs in order to enhance circularity thereof, and a columnar aggregate of the honeycomb units 11' is fabricated.

Next, an outer circumference coating layer paste is applied to the outer circumferential surface of the columnar aggregate of the honeycomb units 11' except for both end surfaces thereof.

The outer circumference coating layer paste may be the same as or different from the adhesive layer paste.

Next, the columnar aggregate of the honeycomb units 11', to which the outer circumference coating layer paste is applied, is dried and solidified, whereby the columnar honeycomb catalyst 10' is fabricated. At this time, in a case where the organic binder is contained in the adhesive layer paste and/or the outer circumference coating layer paste, it is preferable to degrease the honeycomb units 11'. The degreasing condition can be selected appropriately in accordance with the type and amount of the organic matter; however, is preferably 500°C for 1 hour.

The honeycomb catalyst 10' is composed in such a manner that the four honeycomb units 11' are adhered to one another via the adhesive layer 13; however, the number of honeycomb units which compose the honeycomb catalyst is not particularly limited. For example, such a columnar honeycomb catalyst may be composed in such a manner that 16 pieces of quadrangular prism-like honeycomb units are adhered to one another via the adhesion layer.

Note that the outer circumference coating layers 12 do not have to be formed in the honeycomb catalysts 10 and 10'.

EXAMPLES

Hereinafter, a more specific description will be made of the present invention by examples; however, the present invention is not limited to the following examples.

EXAMPLE 1

FABRICATION OF HONEYCOMB CATALYST

22.7 wt% of CHA zeolite shown in Table 1, 20.2 wt% of titanium oxide with an average particle size of 0.2 $\mu$m, 6.8 wt% of pseudo-boehmite as an inorganic binder, 6.8 wt% of glass fiber with an average fiber length of 100 $\mu$m, 6.2 wt% of methyl cellulose, 3.4 wt% of a surfactant, 4.8 wt% of polystyrene particles with an average particle size of 0.8 $\mu$m, which serve as a pore-forming material, and 29.2 wt% of ion exchange water were mixed and kneaded together, whereby a raw material paste was prepared. Note that, as the zeolite, one in which ions were exchanged with copper ions was used.

TABLE 1

| EXAMPLE | | | 1 | 2 | 3 | 4 | 5 | 6 | COMPARATIVE 1 | COMPARATIVE 2 |
|---|---|---|---|---|---|---|---|---|---|---|
| ZELOUTE | COMPOSITION ($SiO_2/AL_2O_3$) | | 13 | 13 | 13 | 13 | 13 | 13 | 13 | 30 |
| | CARRIED AMOUNT OF Cu (WT%) | | 4.2 | 4.4 | 4.5 | 3.5 | 3.5 | 5.5 | 3.0 | 3.3 |
| | AVERAGE PARTICLE SIZE ($\mu$m) | | 0.3 | 0.14 | 0.47 | 0.77 | 1.0 | 1.0 | 1.34 | 0.1 |
| | CONTENT WITH RESPECT TO HONEYCOMB UNIT | | 220 | 223 | 245 | 225 | 250 | 260 | 222 | 195 |
| EVAIUATION | $NO_x$ PURIFYING PERFORMANCE | 200°C | 75 | 76 | 77 | 75 | 74 | 80 | 69 | 57 |
| | | 525°C | 82 | 80 | 76 | 77 | 78 | 78 | 75 | 63 |
| | WATER ABSORPTION DISPLACEMENT (%) | | 0.2 | 0.18 | 0.21 | 0.22 | 0.24 | 0.24 | 0.26 | 0.18 |

Next, the raw material paste is subjected to extrusion molding by using an extruder, whereby a honeycomb compact was fabricated. Then, by using a reduced-pressure microwave dryer, the honeycomb compact was dried with an output of 4.5 kW at a reduced pressure of 6.7 kPa for 7 minutes, and thereafter, was degreased and fired at an oxygen concentration of 1% at 700°C for 5 hours, whereby a honeycomb catalyst (honeycomb unit) was fabricated. The honeycomb unit had a square prism shape with a side of 35 mm and a length of 150 mm, in which a density of through holes was 124 pcs/cm$^2$, and a thickness of partition walls was 0.20 mm.

EXAMPLE 2

A honeycomb catalyst of Example 2 was fabricated in a similar way to Example 1 except that the CHA zeolite was changed to the one shown in Table 1.

EXAMPLE 3

22.2 wt% of the CHA zeolite shown in Table 1, 24.8 wt% of zirconia with an average particle size of 0.04 $\mu$m, 5.8 wt% of pseudo-boehmite as an inorganic binder, 5.8 wt% of glass fiber with an average fiber length of 100 $\mu$m, 6.2 wt% of methyl cellulose, 3.4 wt% of a surfactant, and 31.7 wt% of ion exchange water were mixed and kneaded together, whereby a raw material paste was prepared. Note that, as the zeolite, one in which ions were exchanged with copper ions was used.

Subsequently, by using the prepared raw material paste, a honeycomb catalyst of Example 3 was fabricated in a similar way to Example 1.

EXAMPLE 4

A honeycomb catalyst of Example 4 was fabricated in a similar way to Example 1 except that the CHA zeolite was changed to the one shown in Table 1.

EXAMPLE 5

23.8 wt% of the CHA zeolite shown in Table 1, 21.2 wt% of titanium oxide with an average particle size of 0.2 $\mu$m, 7.1 wt% of pseudo-boehmite as an inorganic binder, 7.1 wt% of glass fiber with an average fiber length of 100 $\mu$m, 6.5 wt% of methyl cellulose, 3.6 wt% of a surfactant, and 30.7 wt% of ion exchange water were mixed and kneaded together, whereby a raw material paste was prepared. Note that, as the zeolite, one in which ions were exchanged with copper ions was used.

Subsequently, by using the prepared raw material paste, a honeycomb catalyst of Example 5 was fabricated in a similar way to Example 1.

EXAMPLE 6

A honeycomb catalyst of Example 6 was fabricated in a similar way to Example 1 except that the CHA zeolite was changed to the one shown in Table 1.

COMPARATIVE EXAMPLE 1

A honeycomb catalyst of Comparative example 1 was fabricated in a similar way to Example 1 except that the CHA zeolite was changed to the one shown in Table 1.

COMPARATIVE EXAMPLE 2

A honeycomb catalyst of Comparative example 2 was fabricated in a similar way to Example 1 except that the CHA zeolite was changed to the one shown in Table 1.

MEASUREMENT OF PURIFICATION RATE FOR NO$_X$

By using a diamond cutter, from the honeycomb units, columnar test specimens with a diameter of 25.4 mm and a length of 38.1 mm were cut out. Each of the test specimens was subjected to heat treatment under conditions where a temperature was 650°C, a time was 75 hours, gas was composed of 10% of water, 21% of oxygen and a balance of nitrogen, and a gas flow rate was 1 L/min. Through the test specimen, imitation gas at 200 °C was flown at a space velocity (SV) of 100000/hr, and meanwhile, an amount of NOx flowing out of the test specimen was measured by using a catalyst evaluation device (SIGU-2000/MEXA-6000FT made by HORIBA Ltd.), and the purification rate [%] for NOx, which is represented by the following Expression (1) was calculated:

$$\text{(Flow-in amount of NOx)} - \text{(Flow-out amount of NOx)} / \text{(Flow-in amount of NOx)} \times 100 \quad \ldots (1)$$

Note that, with regard to constituents, the imitation gas contained 262.5 ppm of nitrogen monoxide, 87.5 ppm of nitrogen dioxide, 350 ppm of ammonia, 10% of oxygen, 5% of carbon dioxide, 5% of water, and nitrogen (balance).

In a similar way, the purification rate [%] for NOx was calculated while flowing the imitation gas at 525° at SV of 150000/hr. With regard to constituents at this time, the imitation gas contained 315 ppm of nitrogen monoxide, 35 ppm of nitrogen dioxide, 385 ppm of ammonia, 10% of oxygen, 5% of carbon dioxide, 5% of water, and nitrogen (balance). Table 1 shows the NOx purification rate of the honeycomb catalysts which used the zeolites obtained in Examples 1 to 6 and Comparative examples 1 and 2.

MEASUREMENT OF WATER ABSORPTION DISPLACEMENT

By using a diamond cutter, from the honeycomb units, square prism-like test specimens with a side of 35 mm and a length of 10 mm were cut out. Each of the test specimens was dried at 200°C for 2 hours in a dryer. Thereafter, by using a measuring microscope (Measuring Microscope MM-40 made by Nikon Corporation; magnification: 100 power), a distance between absolutely dried outermost walls (distance between an outermost wall on the honeycomb of the test specimen and an opposite outermost wall thereon) was measured. A measurement position was set to a center portion in the longitudinal direction of an outer periphery of the test specimen, and the measurement was performed for only one side of the test specimen. Subsequently, the test specimen was immersed into water for one hour, and water on a surface of such a sample was removed by air blowing, and thereafter, a distance between the water-absorbing outermost walls was measured by a similar measurement method. The water absorption displacement was calculated by Expression (2):

$$\text{(Distance between absolutely dried outermost walls} - \text{Distance between water-absorbing outermost walls)} / \text{(Distance between absolutely dried outermost walls)} \times 100 \quad \ldots (1)$$

Table 1 shows the water absorption displacements of the honeycomb catalysts which used the zeolites obtained in Examples 1 to 6 and Comparative examples 1 and 2.

With reference to Table 1, in Examples 1 to 6, good results were obtained in both of the purification rate for NOx and the water absorption displacement. In contrast, in Comparative example 1 where the average particle size of the zeolite is large, the water absorption displacement was as large as 0.26%. Moreover, in Comparative examples 1 and 2 where the carried amount of Cu is less than 3.5, the purification rate for NOx was as poor as less than 70%.

DESCRIPTION OF REFERENCE NUMERALS

10, 10'     honeycomb catalyst
11, 11'     honeycomb unit
11a         through hole
11b         partition wall
12          outer circumference coating layer
13          adhesive layer

**Claims**

1. A honeycomb catalyst including a honeycomb unit having a plurality of through holes provided in parallel in a longitudinal direction and separated from one another by partition walls, wherein the honeycomb unit contains zeolite and an inorganic binder, and the zeolite satisfies all of conditions (A) to (D):

   (A) to have a CHA structure in which a composition ratio of $SiO_2/Al_2O_3$ is less than 15;
   (B) to have Cu carried by 3.5 to 6.0 wt% with respect to zeolite;
   (C) to have an average particle size of 0.05 to 1 $\mu$m; and
   (D) to be contained by 150 to 350 g/L with respect to a whole of the honeycomb unit.

2. The honeycomb catalyst according to claim 1, wherein the average particle size of the zeolite is 0.05 to 0.5 $\mu$m.

3. The honeycomb catalyst according to either one of claims 1 and 2, wherein the honeycomb unit further contains inorganic particles, and a content of the inorganic particles is 10 to 50 vol% per honeycomb unit.

4. The honeycomb catalyst according to claim 3, wherein an average particle size of the inorganic particles is 0.01 to 5 $\mu$m.

5. The honeycomb catalyst according to either one of claims 3 and 4, wherein a ratio (Y/X) of the average particle size (X) of the zeolite and the average particle size (Y) of the inorganic particles is 1/10 to 5.

6. The honeycomb catalyst according to any one of claims 1 to 5, wherein the honeycomb unit further contains inorganic fiber.

7. The honeycomb catalyst according to any one of claims 1 to 6, wherein a density of through holes on a cross section perpendicular to the longitudinal direction of the honeycomb unit is 62 to 186 pcs/cm$^2$, and a thickness of the partition walls of the honeycomb unit is 0.1 to 0.3 mm.

8. The honeycomb catalyst according to any one of claims 1 to 7, wherein the honeycomb catalyst has a columnar shape with a diameter of 140 to 350 mm, and a length of 75 to 310 mm.

FIG. 1

FIG. 2

FIG. 3

## INTERNATIONAL SEARCH REPORT

International application No.

PCT/JP2015/078444

A. CLASSIFICATION OF SUBJECT MATTER
*B01J35/04*(2006.01)i, *B01D53/94*(2006.01)i, *B01J29/76*(2006.01)i, *F01N3/10*
(2006.01)i, *F01N3/28*(2006.01)i

According to International Patent Classification (IPC) or to both national classification and IPC

B. FIELDS SEARCHED

Minimum documentation searched (classification system followed by classification symbols)
B01J35/04, B01D53/94, B01J29/76, F01N3/10, F01N3/28

Documentation searched other than minimum documentation to the extent that such documents are included in the fields searched
Jitsuyo Shinan Koho          1922-1996     Jitsuyo Shinan Toroku Koho     1996-2015
Kokai Jitsuyo Shinan Koho     1971-2015     Toroku Jitsuyo Shinan Koho     1994-2015

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| Y | JP 2013-32268 A (Mitsubishi Plastics, Inc.), 14 February 2013 (14.02.2013), claims; paragraphs [0088], [0091] to [0095]; table 2 & US 2013/0266785 A1 claims; paragraphs [0213], [0222] to [0228]; table 2 & WO 2013/002059 A    & EP 2724983 A1 | 1-8 |
| Y | JP 2014-122142 A (Mitsubishi Plastics, Inc.), 03 July 2014 (03.07.2014), claims; paragraphs [0055], [0117] to [0121]; examples (Family: none) | 1-8 |

[X] Further documents are listed in the continuation of Box C.      [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 October 2015 (30.10.15) | 10 November 2015 (10.11.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

| International application No. |
| --- |
| PCT/JP2015/078444 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | WO 2009/141881 A1 (Ibiden Co., Ltd.), 26 November 2009 (26.11.2009), claims; paragraphs [0028] to [0053]; each example & US 2009/0291254 A1 claims; paragraphs [0024] to [0059]; examples & EP 2130806 A2 | 1-8 |
| Y | JP 2011-56328 A (Ibiden Co., Ltd.), 24 March 2011 (24.03.2011), claims; paragraphs [0026] to [0040]; examples 1, 2 (Family: none) | 1-8 |
| Y | JP 2014-515723 A (PQ Corp.), 03 July 2014 (03.07.2014), claims; example 6; table 1 & US 2012/0269719 A1 claims; example 6; table 1 & WO 2012/145323 A1 & EP 2699345 A1 | 1,3-8 |
| Y | Ja Hun Kwak et al., Effects of hydrothermal aging on NH3-SCR reaction over Cu/zeolites, Journal of Catalysis, 2012.03, Volume 287, Pages 203-209 | 1-8 |
| P,X | JP 5740040 B1 (Ibiden Co., Ltd.), 01 May 2015 (01.05.2015), claims; examples (Family: none) | 1-8 |
| A | SATU T. KORHONEN et al., ISOLATED $Cu^{2+}$ IONS: ACTIVE SITES FOR SELECTIVE CATALYTIC REDUCTION OF NO, CHEMICAL COMMUNICATIONS, 2010.11.29, vol.47, p.800-802 | 1-8 |
| A | FICKEL DUSTIN W. et al., COPPER COORDINATION IN Cu-SSZ-13 AND Cu-SSZ-16 INVESTIGATED BY VARIABLE-TEMPERATURE XRD, JOURNAL OF PHYSICAL CHEMISTRY C, 2010.01.28, vol.114 no.3, p.1633-1640 | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009141888 A1

- WO 2012086753 A1